# EUROPEAN PATENT SPECIFICATION

(11) **EP 4 660 238 B1**
(45) Date of publication and mention of the grant of the patent: **18.11.2026**
(21) Application number: 24180594.4
(22) Date of filing: 06.06.2024
(51) Int. Cl.: C08L 23/14, C08L 23/12

(54) **POLYPROPYLENE COMPOSITIONS CONTAINING RECYCLED POLYOLEFIN**
POLYPROPYLENZUSAMMENSETZUNGEN MIT RECYCELTEM POLYOLEFIN
COMPOSITIONS DE POLYPROPYLÈNE CONTENANT UNE POLYOLÉFINE RECYCLÉE

(43) Date of publication of application: 10.12.2025
(73) Proprietor: Basell Poliolefine Italia S.r.l., 20121 Milano (IT)
(72) Inventor: HEES, Timo, 65926 Frankfurt/M. (DE); CAVALIERI, Claudio, 44122 Ferrara (IT)
(74) Representative: LyondellBasell

(56) References cited:
- EP-B1- 3 883 989
- WO-A1-2024/028148

## Description

### FIELD OF THE INVENTION

The present disclosure relates to polypropylene compositions containing recycled plastic material that can be used in preparation of extruded and molded articles.

### BACKGROUND OF THE INVENTION

Polyolefin compositions having elastic properties while maintaining a good thermoplastic behavior have been used in many application fields, due to the valued properties which are typical of polyolefins, such as chemical inertia, mechanical properties and nontoxicity. Moreover, they can be advantageously transformed into finished products with the same techniques used for thermoplastic polymers. In particular, flexible polymer materials are widely used in the medical field, as well as for packaging, extrusion coating and electrical wires and cables covering.

Elastic polypropylene compositions retaining good thermoplastic behavior have been obtained in the art by way of sequential copolymerization of propylene, optionally containing minor quantities of olefin comonomers, and then ethylene/propylene or ethylene/alpha-olefin copolymers mixtures. Catalysts based on halogenated titanium compounds supported on magnesium chloride are commonly used for this purpose. For instance, EP-A-472 946 describes flexible elastoplastic polyolefin compositions comprising, in parts by weight: A) 10-50 parts of an isotactic propylene homopolymer or copolymer; B) 5-20 parts of an ethylene copolymer, insoluble in xylene at room temperature; and C) 40-80 parts of an ethylene/propylene copolymer containing less than 40% by weight of ethylene and being soluble in xylene at room temperature; the intrinsic viscosity of said copolymer is preferably from 1.7 to 3 dl/g. Said compositions are relatively flexible and have good elastic properties.

In addition, polyolefin compositions, although being appreciated in terms of performances, give raise to concerns in terms of sustainability with particular reference to the fact that their production is based on the use of non-renewable sources.

EP 3 883 989 relates to a polypropylene composition comprising a polypropylene homopolymer and a propylene 1-hexene copolymer. This composition is completely different from that one of the present disclosure.

As a result, a common attempt to mitigate the problem is that of replacing, at least in part, virgin polyolefin compositions with variable amounts of recycled plastic materials.

The recycled plastic polyolefin derive from streams of post-consumer waste (PCW) or post-industrial waste (PIW).

One of the key problems in polyolefin recycling, is the difficulty to quantitatively separate the various types of polymers so that the commercially available recycled products are almost invariably contaminated with heterogeneous materials of various source.

This fact leads to the consequence that polymer compositions including recycled materials are perceived of being affected by lower reliability and lower performances with respect to the compositions made of solely virgin polymers.

It has now been unexpectedly found that it is possible to have an improved property profile especially in terms of impact properties when a recycled polymers is added to a virgin polypropylene.

### SUMMARY OF THE INVENTION

Thus an object of the present disclosure is a recycled polyolefin composition comprising:
A) from 35 wt% to 64 wt%; preferably from 39 wt% to 60 wt%, more preferably from 42 wt% to 58 wt%, of a recycled polypropylene composition having:
   i) ethylene derived units content, measured by ¹³C-NMR, ranging from 0.3 mol% to 1.8 mol%, preferably ranging from 0.4 mol% to 1.7 mol%, more preferably ranging from 0.6 mol% to 1.8 mol%,;
   ii) 1-butene derived units content, measured by ¹³C-NMR, ranging from 0.4 mol% to 2.5 mol%, preferably ranging from 0.5 mol% to 2.0 mol%, more preferably ranging from 0.7 mol% to 1.5 mol%;
   iii) propylene derived units content, measured by ¹³C-NMR, higher than 90.0 mol%; preferably higher than 93.0 mol%; more preferably higher than 95.0 mol%;
   iv) the ¹³C-NMR sequences BBB wherein B is 1-butene derived unit ranging from 0.4 mol% to 2.5 mol%, preferably ranging from 0.5 mol% to 2.0 mol%, more preferably ranging from 0.7 mol% to 1.5 mol%;
   v) Melt Flow Rate, determined according to the method ISO 1133 (230° C, 2.16 kg), ranging from 0.5 g/10 min to 20.0 g/10 min; preferably from 2.0 g/10 min to 15.0 g/10 min, more preferably from 5.0 g/10 min to 13.0 g/10 min;
   vi) Xylene Soluble fraction at 25°C, determined according to ISO 16152: 2005, ranging from 4.8 wt% to 10.7 wt%, preferably ranging from 5.3 wt% to 9.8 wt%, more preferably ranging from 6.2 wt% to 9.2 wt%.
(B) from 30 wt% to 50 wt% preferably from 32 to 48 wt%, more preferably from 35 wt% to 45 wt% of a propylene homopolymer having a Melt Flow Rate, determined according to the method ISO 1133 (230° C, 2.16 kg), ranging from 4.0 g/10 min to 22.0 g/10 min; preferably from 7.0 g/10 min to 20.0 g/10 min; more preferably from 9.0 g/10 min to 16.0 g/10 min; and a Xylene Soluble fraction at 25°C, determined according to ISO 16152: 2005, ranging from 1.5 wt% to 4.6 wt%; preferably from 2.2 wt% to 4.3 wt%; more preferably from 2.3 wt% to 4.1 wt%;
C) from 4 wt% to 18 wt%; preferably from 5 wt% to 16 wt%, more preferably from 6 wt% to 14 wt%, of a propylene ethylene copolymer comprising;
   c1) from 29 wt% to 59 wt%; preferably from 34 wt% to 54 wt%; more preferably from 39 wt% to 49 wt% of a propylene homopolymer having a Xylene Soluble fraction, determined according to ISO 16152: 2005, lower than 4.0 wt%; preferably lower than 3.5 wt%; more preferably lower than 3.0 wt% and a Melt Flow Rate (ISO 1133 230°C/2.16 kg) ranging from 65 g/10 min to 120 g/10 min; preferably from 70 g/10 min to 115 g/10 min; more preferably from 75 g/10 min to 110 g/10 min;
   c2) from 41 wt% to 71 wt%; preferably from 46 wt% to 66 wt%; more preferably from 51 wt% to 61 wt%; of a propylene ethylene copolymer containing from 30.8 wt% to 62.0 wt%; preferably from 33.6 wt% to 59.6 wt%; more preferably from 38.7 wt% to 57.9 wt% of ethylene derived units measured according to ¹³C-NMR method described in the specification;
   said propylene ethylene copolymer being further characterized by
      - a Melt Flow Rate (ISO 1133 230°C/5.0 kg) ranging from 0.5 to 11.2 g/10min; preferably ranging from 0.9 to 10.1 g/10min, more preferably ranging from 1.5 to 8.5 g/10min;
      - an amount of fraction soluble in xylene at 25°C, determined according to ISO 16152: 2005, ranging from 35.0 wt% to 58.0 wt%; preferably ranging from 38.0 wt% to 56.0 wt%; more preferably ranging from 40 wt% to 53 wt%;
      - intrinsic viscosity of the fraction soluble in xylene at 25°C, measured in tetrahydronaphthalene at 135 °C, ranging from 2.3 to 4.9 dl/g; preferably ranging from 2.6 to 4.5 dl/g, more preferably ranging from 2.9 to 4.1 dl/g,
      - total content of ethylene, measured according to ¹³C-NMR method described in the specification, ranging from 19.2 wt% to 35.9 wt%; preferably ranging from 22.4 wt% to 33.8 wt%; more preferably ranging from 23.6 wt% to 31.7 wt%;
   in the said propylene ethylene copolymer the sum of c1) and c2), being referred to the total weight of c1) and c2), is 100 wt%,
   Wherein the Melt Flow Rate of the recycled polyolefin composition, determined according to the method ISO 1133 (230° C, 2.16 kg), ranges from 34.0 g/10 min to 64.0 g/10 min; preferably from 37.0 g/10 min to 61.0 g/10 min, more preferably from 41.0 g/10 min to 57.0 g/10 min;
   the sum of the amounts of (A), (B) and (C) being referred to the total weight of (A), (B) and (C) is 100 wt%.

### DETAILED DESCRIPTION OF THE INVENTION

The recycled polypropylene composition component A) is a "Post-Industrial Resin" (PIR). The term "PIR" refers to a plastic material originating from the mechanical recycling of a post-industrial waste.

Preferably the recycled polypropylene composition component A) does not contain limonene.

Preferably the recycled polypropylene composition component A) has at least one of the following features:
i) the ¹³C-NMR sequences XEX wherein X can be a propylene derived unit or a 1-butene derived unit, ranging from 0.20 mol% to 0.55 mol%; preferably ranging from 0.25 mol% to 0.50 mol%, more preferably ranging from 0.32 mol% to 0.46 mol%;
ii) the ¹³C-NMR sequences EEE ranging from 0.05 mol% to 0.40 mol%; preferably ranging from 0.10 mol% to 0.35 mol%, more preferably ranging from 0.15 mol% to 0.30 mol%;
iii) the ¹³C-NMR sequences XBX , X can be a propylene derived unit or a 1-butene derived unit ranging from 0.50 mol% to 2.20 mol%, preferably ranging from 0.68 mol% to 1.90 mol%, more preferably ranging from 0.75 mol% to 1.64 mol%;
iv) the ¹³C-NMR sequences BBE are not present;

Preferably the propylene homopolymer component B) has Charpy notched impact strength at 23°C, determined according to ISO 179-1eA, and ISO 1873-2, ranging from 2.0 to 9.0 kJ/m², more preferably ranging from 3.0 to 6.0 kJ/m^{2:} more preferably ranging from 3.5 to 5.2 kJ/m².

The propylene homopolymer component B) has a Tensile modulus, determined according to ISO 527, ranging between 980 and 1980 MPa, preferably between 1180 and 1780 MPa; more preferably between 1280 and 1680 MPa.

The recycled polyolefin composition according to the present disclosure preferably has a Tensile modulus, determined according to ISO 527, ranging between 800 and 1800 MPa, preferably between 850 and 1500 MPa; more preferably between 900 and 1200 MPa.

The recycled polyolefin composition preferably has a Charpy notched impact strength at 23°C, determined according to ISO 179-1eA, and ISO 1873-2, ranging from 3.0 to 8.0 kJ/m², more preferably ranging from 3.8 to 6.0 kJ/m^{2:} more preferably ranging from 4.3 to 5.2 kJ/m². The Charpy notched impact strength at 0°C ranges from 1.5 to 3.3 kJ/m², preferably between from 2.0 to 3.0 kJ/m², more preferably between from 2.1 to 2.8 kJ/m².

Preferably The recycled polyolefin composition has at least one of the following features:
- melting point ranging from 150 °C to 163°C; preferably ranging from 155 °C to 161°C;
- Tc ranging from 108 °C to 118°C; preferably ranging from 111 °C to 115°C.

With the recycled polyolefin composition according to the present disclosure is possible in particular to achieve a material having a particular balance of modulus and impact properties, in particular the impact properties especially at 0°C are improved by maintaining an high modulus.

The Melt Flow Rate (MFR) of the recycled polyolefin composition can be obtained even by subsequent chemical treatment (chemical visbreaking).

The chemical visbreaking of the polymer is carried out in the presence of free radical initiators, such as the peroxides.

The peroxides which are most conveniently used in the polymer visbreaking process have a decomposition temperature preferably ranging from 150°C to 250°C. Examples of said peroxides are di-tert-butyl peroxide, dicumyl peroxide, 2,5-dimethyl-2,5-di(tert-butylperoxy)hexyne and 2,5-dimethyl-2,5-di(tert-butylperoxy)hexane, all of which are commercially available.

The quantity of peroxide necessary for the visbreaking process preferably ranges from 0.001 to 0.5% by weight of the polymer, more preferably from 0.001 to 0.2%.

The term "copolymer" as used herein refers to polymers with two different recurring units in the chain. By "ambient temperature" and "room temperature" is meant a temperature of 25 °C.

By the term "crystalline polypropylene" is meant in the present application a propylene polymer having an amount of isotactic pentads (mmmm), measured by 13C-MNR on the fraction insoluble in xylene at 25° C, higher than 70 molar %; by "elastomeric" polymer is meant a polymer having solubility in xylene at ambient temperature higher than 50 wt%.

Component B) can be obtained by polymerizing propylene with processes commonly known in the art. Component B for example can be commercially available such as Moplen HP500N sold by Lyondellbasell.

Component C) can be prepared by polymerizing propylene, in mixture with ethylene. Component B) and C) can be prepared in the presence of a catalyst comprising the product of the reaction between:
i) a solid catalyst component comprising Ti, Mg, Cl, and at least an internal electron donor compound;
ii) an alkylaluminum compound and,
iii) an external electron-donor compound; preferably the external donor compound has the general formula:

   (R7)a(R8)bSi(OR9)c,

   where a and b are integers from 0 to 2, c is an integer from 1 to 4 and the sum (a+b+c) is 4; R7, R8, and R9, are alkyl, cycloalkyl or aryl radicals with 1-18 carbon atoms optionally containing heteroatoms.

The internal donor is preferably selected from the esters of mono or dicarboxylic organic acids such as benzoates, malonates, phthalates and certain succinates. Examples of internal donors are described in US 4522930A, EP 045977A2 and international patent applications WO 00/63261 and WO 01/57099. Particularly suited are the phthalic acid esters and succinate acids esters. Alkylphthalates are preferred, such as diisobutyl, dioctyl and diphenyl phthalate and benzyl-butyl phthalate.

The particles of solid component (i) may have substantially spherical morphology and average diameter ranging between 5 and 150 µm, preferably from 20 to 100 µm and more preferably from 30 to 90 µm. As particles having substantially spherical morphology, those are meant wherein the ratio between the greater axis and the smaller axis is equal to or lower than 1.5 and preferably lower than 1.3.

The amount of Mg may preferably range from 8 to 30% more preferably from 10 to 25wt%.

The amount of Ti may range from 0.5 to 7% and more preferably from 0.7 to 5wt%.

According to one method, the solid catalyst component (i) can be prepared by reacting a titanium compound of formula Ti(OR)_{q-y}X_{y}, where q is the valence of titanium and y is a number between 1 and q, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride, operating under stirring conditions at the melting temperature of the adduct (100-130°C). Then, the adduct is mixed with an inert hydrocarbon immiscible with the adduct thereby creating an emulsion which is quickly quenched causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is of lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound can be added in the desired ratios during the treatment with TiCl₄.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et3Cl₃, possibly in mixture with the above cited trialkylaluminums. The Al/Ti ratio is higher than 1 and may preferably range between 50 and 2000.

Particularly preferred are the silicon compounds (iii) in which a is 1, b is 1, c is 2, at least one of R⁷ and R⁸ is selected from branched alkyl, cycloalkyl or aryl groups with 3-10 carbon atoms optionally containing heteroatoms and R⁹ is a C1-C10 alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane. Moreover, are also preferred the silicon compounds in which a is 0, c is 3, R⁸ is a branched alkyl or cycloalkyl group, optionally containing heteroatoms, and R⁹ is methyl. Examples of such preferred silicon compounds are cyclohexyltrimethoxysilane, t-butyltrimethoxysilane and thexyltrimethoxysilane.

The external electron donor compound (iii) is used in such an amount to give a molar ratio between the organoaluminum compound and said external electron donor compound (iii) of from 0.1 to 200, preferably from 1 to 100 and more preferably from 3 to 50.

Component C) can be prepared in a continuous sequential polymerization process, wherein component c1) is prepared in the first reactor and component c2) is prepared in the second reactor in the presence of component c1) according to the known techniques and operating in gas phase, or in liquid phase in the presence or not of inert diluent, or by mixed liquid-gas techniques.

Component C) is an heterophasic propylene ethylene copolymer, for example it can be commercially available such as Hifax CA138A sold by Lyondellbasell

The following examples are given in order to illustrate, but not limit the present disclosure.

### EXAMPLE

### Characterization methods

### Melting temperature and crystallization temperature:

Determined by differential scanning calorimetry (DSC). The melting point has been measured by using a DSC instrument according to ISO 11357-3, at scanning rate of 20 °C/min both in cooling and heating, on a sample of weight between 5 and 7 mg, under inert N2 flow. Instrument calibration made with Indium.

**Melt Flow Rate:** Determined according to the method ISO 1133-1 (230° C, 2.16 kg).

**Xylene Soluble fraction (XS) at 25°C:** Xylene Solubles at 25°C have been determined according to ISO 16152: 2005; with solution volume of 250 ml, precipitation at 25°C for 20 minutes, 10 of which with the solution in agitation (magnetic stirrer), and drying at 70°C.

**Intrinsic Viscosity (I.V.):** The sample is dissolved by tetrahydronaphthalene at 135 °C and then it is poured into the capillary viscometer. The viscometer tube (Ubbelohde type) is surrounded by a cylindrical glass jacket; this setup allows temperature control with a circulating thermostated liquid. The downward passage of the meniscus is timed by a photoelectric device. The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [η].

**Comonomer determination via ¹³C-NMR:** ¹³C-NMR spectra were acquired on a Bruker AV600 spectrometer equipped with cryo probe, operating at 150.91 MHz in the Fourier transform mode at 120 °C. The peak of the S_{δδ} carbon (nomenclature according C.J. Carman, R.A. Harrington and C.E. Wilkes, Macromolecules, 10, 3, 536 (1977)) was used as internal reference at 29.9 ppm. About 30 mg of sample were dissolved in 0.5 ml of 1,1,2,2 tetrachloro ethane d₂ at 120 °C w. Each spectrum was acquired with a 90 ° pulse, 15 seconds of delay between pulses and CPD to remove ¹H-¹³C coupling. 512 transients were stored in 65 K data points using a spectral window of 9000 Hz. Triad distribution was obtained using the following relations: $\begin{matrix}XPX = 100 {I}_{8} / Σ \\ XPE = 100 {I}_{5} / Σ\end{matrix}$ $XPE = 100 {I}_{5} / Σ$$EPE = 100 {I}_{4} / Σ$ $XBX = 100 {I}_{3} / Σ$ $XBE = 100 {I}_{2} / Σ$ $XEX = 100 {I}_{9} / Σ$ $XEE = 100 {I}_{1} / Σ$ $EEE = 100 \left(0.5 {I}_{7}+0.25 {I}_{6}\right) / Σ$ Where $Σ = {I}_{8} + {I}_{5} + {I}_{4} + {I}_{3} + {I}_{2} + {I}_{9} + {I}_{1} + 0.5 {I}_{7} + 0.25 {I}_{6}$ I are the areas of the corresponding carbon as reported in Table 1 and X can be Propylene or 1-Butene
The molar content of Ethylene, Propylene and 1-Butene is obtained from triads using the following relations: $P \left(m%\right) = XPX + XPE + EPE$ $B \left(m%\right) = XBX + XBE + EBE$ $E \left(m%\right) = EEE + XEE + XEX$
Molar content was transformed in weight using monomers molecular weight.

**Table 1 Assignments of the ¹³C-NMR spectrum of Ethylene/Propylene/1-Butene containing polymers**

| Number | Chemical Shift (ppm) | Carbon | Sequence |
|---|---|---|---|
| 1 | 37.64 - 37.35 | S_{αδ} | PEE |
| 2 | 37.35 - 37.15 | T_{βδ} | XBE |
| 3 | 35.27 - 34.92 | T_{ββ} | XBX |
| 4 | 33.29 - 33.15 | T_{δδ} | EPE |
| 5 | 30.93 - 30.77 | T_{βδ} | XPE |
| 6 | 30.35 - 30.26 | S_{γδ} | PEEE |
| 7 | 29.97 - 29.85 | S_{δδ} | EEE |
| 8 | 29.14 -28.31 | T_{ββ} | XPX |
| 9 | 24.88 - 24.14 | S_{ββ} | XEX |

### Samples for the mechanical tests

Samples have been obtained according to ISO 1873-2:2007.
**Charpy notched impact:** determined according to ISO 179-1eA, and ISO 1873-2
**Elongation at yield:** measured according to ISO 527.
**Elongation at break:** measured according To ISO 527
**Stress at break:** measured according to ISO 527.
**Tensile Modulus** according to ISO 527-2,

### Component A)

Component A) is a PIR recycled resin having the features reported in Table 1.

**Table 1**

| | | **Ex1** |
|---|---|---|
| Ethylene | **mol%** | **1.0.** |
| **1-butene** | **mol%** | **0.8** |
| XEX | **mol%** | **0.44** |
| EEE | **mol%** | **0.29** |
| XBX | **mol%** | **0.84** |
| BBE | **mol%** | **0.00** |
| MFR, 230 °C 2.16 kg, | **g/10 min** | **8.3** |
| XS | **wt%** | **7.0** |

### Component B)

Component C is a commercial propylene homopolymer sold by Lyondellbasell under the tradename of Moplen HP500 N having an MFR (230°C and 2.16 kg) of 12.0 g/10 min; a fraction soluble in xylene at 25°C of 3.1 wt%; Charpy notched impact strength at 23°C of 4 kJ/m² and a tensile modulus of 1400 MPa

### Component C)

Component C) is an heterophasic propylene copolymer sold by LyondellBasell under the tradename Hifax CA138A. The features reported in Table 2.

**Table 2**

| component C) | | |
|---|---|---|
| c1) | | |
| XS | wt% | 2.5 |
| MFR 230°C/2.16 kg | g/10 min | 95 |
| split | wt% | 44 |

| c2) | | |
|---|---|---|
| C2 content | wt% | 49.0 |
| split | wt% | 56 |

| total composition | | |
|---|---|---|
| MFR 230°C/5 kg | g/10 min | 3 |
| XS | wt% | 48.5 |
| I.V. on XS | dl/g | 3.5 |
| C2 content | wt% | 28.0 |

### Comparative component C1) is a commercial HDPE sold by Lyondellbasell

### Example 1 and comparative example 2

Components A, B), C) and C1) have been blended with the amounts indicated in table 3

**Table 3**

| | Ex 1 | Comp Ex 2 |
|---|---|---|
| Component A | 50 | 50 |
| Component B | 40 | 45 |
| Component C | 10 | |
| Component C1 | | 5 |

To reach the target MFR value, 710 ppm of peroxide Enox 101 (2-5-Dimethyl-2-5-di-tert-butylperoxy-hexane) was added in both formulations during extrusion.
The features of the composition of example 1 and comparative example 2 are reported in Table 4.

**Table 4**

| | **Units** | **Ex 1** | **Comp Ex 2** |
|---|---|---|---|
| Melt Flow Rate | g/10min | 49 | 43 |
| Charpy 23°C | kJ/m2 | 4.9 | 3.1 |
| Charpy 0°C | kJ/m2 | 2.3 | 1.4 |
| D/B TT | °C | -8.7 | >10 |
| Tensile Modulus | N/mm2 | 1120 | 1160 |
| Hc | J/g | -91.9 | -100.8 |
| Hm | J/g | 83.2 | 90.2 |
| Tm | deg_C | 158.4 | 158.4 |
| Tc | deg_C | 112.9 | 110.8 |

The composition of example 1 shows an higher Charpy with substantially the same modulus.

## Claims

1. A recycled polyolefin composition comprising:
A) from 35 wt% to 64 wt%; of a recycled polypropylene composition having:
i) ethylene derived units content, measured by ¹³C-NMR, ranging from 0.3 mol% to 1.8 mol%;
ii) 1-butene derived units content, measured by ¹³C-NMR, ranging from 0.4 mol% to 2.5 mol%;
iii) propylene derived units content, measured by ¹³C-NMR, higher than 90.0 mol%;
iv) the ¹³C-NMR sequences BBB wherein B is 1-butene derived unit ranging from 0.4 mol% to 2.5 mol%;
v) Melt Flow Rate determined according to the method ISO 1133 (230° C, 2.16 kg), ranging from 0.5 g/10 min to 20.0 g/10 min;
vi) Xylene Soluble fraction at 25°C, determined according to ISO 16152: 2005, ranging from 4.8 wt% to 10.7 wt%;
B) from 30 wt% to 50 wt% of a propylene homopolymer having a Melt Flow Rate, determined according to the method ISO 1133 (230° C, 2.16 kg), ranging from 4.0 g/10 min to 22.0 g/10 min; and a Xylene Soluble fraction at 25°C, determined according to ISO 16152: 2005, ranging from 1.5 wt% to 4.6 wt%;
C) from 4 wt% to 18 wt%; a propylene ethylene copolymer comprising;
c1) from 29 wt% to 59 wt%; of a propylene homopolymer having a Xylene Soluble fraction , determined according to ISO 16152: 2005, lower than 4.0 wt%; and a Melt Flow Rate (ISO 1133 230°C/2.16 kg) ranging from 65 g/10 min to 120 g/10 min;
c2) from 41 wt% to 71 wt%; of a propylene ethylene copolymer containing from 30.8 wt% to 62.0 wt%; of ethylene derived units measured according to ¹³C-NMR method described in the specification;
said propylene ethylene copolymer being further **characterized by**:
- a Melt Flow Rate (ISO 1133 230°C/5.0 kg) ranging from 0.5 to 11.2 g/10min;
- an amount of fraction soluble in xylene at 25°C, determined according to ISO 16152: 2005 ranging from 35.0 wt% to 58.0 wt%;
- intrinsic viscosity of the fraction soluble in xylene at 25°C, measured in tetrahydronaphthalene at 135 °C, ranging from 2.3 to 4.9 dl/g;
- total content of ethylene, measured according to ¹³C-NMR method described in the specification, ranging from 19.2 wt% to 35.9 wt%;
in the said propylene ethylene copolymer the sum of c1) and c2), being referred to the total weight of c1) and c2), is 100wt%,
wherein the Melt Flow Rate of the recycled polyolefin composition, determined according to ISO 1133 (230° C, 2.16 kg), ranges from 34.0 g/10 min to 64.0 g/10 min;
the sum of the amounts of (A), (B) and (C) being referred to the total weight of (A), (B) and (C) is 100wt%.

2. The recycled polyolefin composition according to claim 1 wherein:
component (A) ranges from 39 wt% to 60 wt%,
component (B) ranges from 35wt% to 48 wt%;
component (C) ranges from 5 wt% to 16 wt%.

3. The recycled polyolefin composition according to anyone of claims 1-2 wherein component A) has ethylene derived units content, measured by ¹³C-NMR, ranging from 0.4 mol% to 1.7 mol%.

4. The recycled polyolefin composition according to anyone of claims 1-3 wherein component A) has 1-butene derived units content, measured by ¹³C-NMR, ranging from 0.5 mol% to 2.0 mol%.

5. The recycled polyolefin composition according to anyone of claims 1-4 wherein in component (C) c1) ranges from 34 wt% to 54 wt%; and c2) ranges from 46 wt% to 66 wt%.

6. The recycled polyolefin composition according to anyone of claims 1-5 wherein component (C) has an amount of fraction soluble in xylene at 25°C ranging from 38.0 wt% to 56.0 wt%.

7. The recycled polyolefin composition according to anyone of claims 1-6 wherein component (B) has a Melt Flow Rate, determined according to the method ISO 1133 (230° C, 2.16 kg), ranging from 7.0 g/10 min to 20.0 g/10 min.

8. The recycled polyolefin composition according to anyone of claims 1-7 wherein component (B) has the Xylene Soluble fraction at 25°C, determined according to ISO 16152: 2005, ranging from 2.2 wt% to 4.3 wt%; %.

9. The recycled polyolefin composition according to anyone of claims 1-8 wherein in component C) the intrinsic viscosity, measured in tetrahydronaphthalene, of the fraction soluble in xylene at 25°C ranges from 2.6 to 4.5 dl/g.

10. The recycled polyolefin composition according to anyone of claims 1-9 wherein in component A) the ¹³C-NMR sequences BBB wherein B is 1-butene derived unit ranges from 0.5 mol% to 2.0 mol%.

11. The recycled polyolefin composition according to anyone of claim 1-10 wherein in component A) the Melt Flow Rate, determined according to the method ISO 1133 (230° C, 2.16 kg), ranges from 2.0 g/10 min to 15.0 g/10 min.

12. The recycled polyolefin composition according to anyone of claim 1-11 wherein in component C) the intrinsic viscosity of the fraction soluble in xylene at 25°C, measured in tetrahydronaphthalene at 135 °C, ranges from 2.9 to 4.1 dl/g,.

13. The recycled polyolefin composition according to anyone of claim 1-11 wherein in component C) the total content of ethylene, measured according to ¹³C-NMR method described in the specification, ranges from 22.4 wt% to 33.8 wt%.

14. The recycled polyolefin composition according to anyone of claim 1-13 wherein in component C) the amount of fraction soluble in xylene at 25°C ranges from 40 wt% to 53 wt%.

15. An injection molded article made from the recycled polyolefin composition according to claims 1-14.

## Patentansprüche

1. Eine recycelte Polyolefin-Zusammensetzung, umfassend:
A) 35 Gew.-% bis 64 Gew.-% einer recycelten Polypropylen-Zusammensetzung mit:
i) einen Gehalt an von Ethylen abgeleiteten Einheiten, gemessen mittels ¹³C-NMR, im Bereich von 0,3 Mol-% bis 1,8 Mol-%;
ii) einen Gehalt an von 1-Buten abgeleiteten Einheiten, gemessen mittels ¹³C-NMR, im Bereich von 0,4 Mol-% bis 2,5 Mol-%;
iii) Gehalt an von Propylen abgeleiteten Einheiten, gemessen mittels ¹³C-NMR, von mehr als 90,0 Mol-%;
iv) die ¹³C-NMR-Sequenzen BBB, wobei B eine von 1-Buten abgeleitete Einheit ist, im Bereich von 0,4 Mol-% bis 2,5 Mol-%;
v) Schmelzflussrate, bestimmt nach der Methode ISO 1133 (230 °C, 2,16 kg), im Bereich von 0,5 g/10 min bis 20,0 g/10 min;
vi) der Xylol-lösliche Anteil bei 25 °C, bestimmt gemäß ISO 16152: 2005, im Bereich von 4,8 Gew.-% bis 10,7 Gew.-%;
B) 30 Gew.-% bis 50 Gew.-% eines Propylen-Homopolymers mit einem Schmelzindex, bestimmt nach der Methode ISO 1133 (230 °C, 2,16 kg), im Bereich von 4,0 g/10 min bis 22,0 g/10 min; und einer xylollöslichen Fraktion bei 25 °C, bestimmt gemäß ISO 16152:2005, im Bereich von 1,5 Gew.-% bis 4,6 Gew.-%;
C) 4 Gew.-% bis 18 Gew.-%; ein Propylen-Ethylen-Copolymer, bestehend aus;
c1) von 29 Gew.-% bis 59 Gew.-%; eines Propylen-Homopolymers mit einem Xylol-löslichen Anteil, bestimmt gemäß ISO 16152: 2005, von weniger als 4,0 Gew.-%; und einer Schmelzflussrate (ISO 1133, 230 °C/2,16 kg) im Bereich von 65 g/10 min bis 120 g/10 min;
c2) 41 Gew.-% bis 71 Gew.-%; eines Propylen-Ethylen-Copolymers, das 30,8 Gew.-% bis 62,0 Gew.-%; an von Ethylen abgeleiteten Einheiten enthält, gemessen gemäß dem in der Beschreibung beschriebenen ¹³C-NMR-Verfahren;
wobei das Propylen-Ethylen-Copolymer ferner **gekennzeichnet ist durch**:
- einer Schmelzflussrate (ISO 1133, 230 °C/5,0 kg) im Bereich von 0,5 bis 11,2 g/10 min;
- einen Anteil an bei 25 °C in Xylol löslichen Fraktionen, bestimmt gemäß ISO 16152:2005, im Bereich von 35,0 Gew.-% bis 58,0 Gew.-%;
- eine intrinsische Viskosität der in Xylol bei 25 °C löslichen Fraktion, gemessen in Tetrahydronaphthalin bei 135 °C, im Bereich von 2,3 bis 4,9 dl/g;
- Gesamtgehalt an Ethylen, gemessen gemäß der in der Beschreibung dargelegten ¹³-C-NMR-Methode, im Bereich von 19,2 Gew.-% bis 35,9 Gew.-%;
in dem genannten Propylen-Ethylen-Copolymer beträgt die Summe aus c1) und c2), bezogen auf das Gesamtgewicht von c1) und c2), 100 Gew.-%,
wobei der Schmelzindex der recycelten Polyolefinzusammensetzung, bestimmt gemäß ISO 1133 (230 °C, 2,16 kg), im Bereich von 34,0 g/10 min bis 64,0 g/10 min liegt;
wobei die Summe der Mengen von (A), (B) und (C), bezogen auf das Gesamtgewicht von (A), (B) und (C), 100 Gew.-% beträgt.

2. Die recycelte Polyolefin-Zusammensetzung gemäß Anspruch 1, wobei:
die Komponente (A) im Bereich von 39 Gew.-% bis 60 Gew.-% liegt,
die Komponente (B) im Bereich von 35 Gew.-% bis 48 Gew.-% liegt;
Komponente (C) im Bereich von 5 Gew.-% bis 16 Gew.-% liegt.

3. Die recycelte Polyolefin-Zusammensetzung gemäß einem der Ansprüche 1-2, wobei die Komponente A) einen Gehalt an von Ethylen abgeleiteten Einheiten, gemessen mittels ¹³C-NMR, im Bereich von 0,4 Mol-% bis 1,7 Mol-% aufweist.

4. Die recycelte Polyolefin-Zusammensetzung gemäß einem der Ansprüche 1 bis 3, wobei die Komponente A) einen Gehalt an von 1-Buten abgeleiteten Einheiten, gemessen mittels ¹³C-NMR, im Bereich von 0,5 Mol-% bis 2,0 Mol-% aufweist.

5. Die recycelte Polyolefin-Zusammensetzung gemäß einem der Ansprüche 1-4, wobei in Komponente (C) c1) im Bereich von 34 Gew.-% bis 54 Gew.-% liegt und c2) im Bereich von 46 Gew.-% bis 66 Gew.-% liegt.

6. Die recycelte Polyolefin-Zusammensetzung gemäß einem der Ansprüche 1-5, wobei die Komponente (C) einen Anteil an bei 25 °C in Xylol löslichen Fraktionen im Bereich von 38,0 Gew.-% bis 56,0 Gew.-% aufweist.

7. Die recycelte Polyolefin-Zusammensetzung gemäß einem der Ansprüche 1 bis 6, wobei die Komponente (B) einen Schmelzindex, bestimmt nach dem Verfahren ISO 1133 (230 °C, 2,16 kg), im Bereich von 7,0 g/10 min bis 20,0 g/10 min aufweist.

8. Die recycelte Polyolefin-Zusammensetzung gemäß einem der Ansprüche 1 bis 7, wobei die Komponente (B) einen Anteil an xylollöslichen Anteilen bei 25 °C, bestimmt gemäß ISO 16152:2005, im Bereich von 2,2 Gew.-% bis 4,3 Gew.-% aufweist.

9. Die recycelte Polyolefin-Zusammensetzung gemäß einem der Ansprüche 1 bis 8, wobei in Komponente C) die in Tetrahydronaphthalin gemessene intrinsische Viskosität der bei 25 °C in Xylol löslichen Fraktion im Bereich von 2,6 bis 4,5 dl/g liegt.

10. Die recycelte Polyolefin-Zusammensetzung gemäß einem der Ansprüche 1 bis 9, wobei in Komponente A) die 13C-NMR-Sequenz BBB, wobei B eine von 1-Buten abgeleitete Einheit ist, im Bereich von 0,5 Mol-% bis 2,0 Mol-% liegt.

11. Die recycelte Polyolefin-Zusammensetzung gemäß einem der Ansprüche 1-10 , wobei in Komponente A) die Schmelzflussrate, bestimmt nach dem Verfahren ISO 1133 (230 °C, 2,16 kg), im Bereich von 2,0 g/10 min bis 15,0 g/10 min liegt.

12. Die recycelte Polyolefin-Zusammensetzung gemäß einem der Ansprüche 1-11, wobei in Komponente C) die intrinsische Viskosität der bei 25 °C in Xylol löslichen Fraktion, gemessen in Tetrahydronaphthalin bei 135 °C, im Bereich von 2,9 bis 4,1 dl/g liegt.

13. Die recycelte Polyolefin-Zusammensetzung gemäß einem der Ansprüche 1 bis 11, wobei in Komponente C) der Gesamtgehalt an Ethylen, gemessen gemäß dem in der Beschreibung beschriebenen 13-C-NMR-Verfahren, im Bereich von 22,4 Gew.-% bis 33,8 Gew.-% liegt.

14. Die recycelte Polyolefin-Zusammensetzung gemäß einem der Ansprüche 1 bis 13, wobei in Komponente C) der Anteil der bei 25 °C in Xylol löslichen Fraktion zwischen 40 Gew.-% und 53 Gew.-% liegt.

15. Ein Spritzgussformteil, hergestellt aus der recycelten Polyolefin-Zusammensetzung gemäß den Ansprüchen 1 bis 14.

## Revendications

1. Une composition de polyoléfine recyclée comprenant :
A) de 35 % en poids à 64 % en poids d'une composition de polypropylène recyclé présentant :
i) une teneur en motifs dérivés de l'éthylène, mesurée par RMN au¹³C, comprise entre 0,3 % en moles et 1,8 % en moles ;
ii) une teneur en motifs dérivés du 1-butène, mesurée par RMN au¹³C, comprise entre 0,4 % en moles et 2,5 % en moles ;
iii) la teneur en motifs dérivés du propylène, mesurée par RMN au¹³C, supérieure à 90,0 % en moles ;
iv) les séquences de RMN au ¹³C de type BBB, où B représente un motif dérivé du 1-butène, compris entre 0,4 % en moles et 2,5 % en moles ;
v) un indice de fluidité à chaud déterminé selon la méthode ISO 1133 (230 °C, 2,16 kg), compris entre 0,5 g/10 min et 20,0 g/10 min ;
vi) la fraction soluble dans le xylène à 25 °C, déterminée selon la norme ISO 16152:2005, comprise entre 4,8 % en poids et 10,7 % en poids ;
B) de 30 % en poids à 50 % en poids d'un homopolymère de propylène présentant un indice de fluidité à chaud, déterminé selon la méthode ISO 1133 (230 °C, 2,16 kg), comprise entre 4,0 g/10 min et 22,0 g/10 min ; et une fraction soluble dans le xylène à 25 °C, déterminée conformément à la norme ISO 16152:2005, comprise entre 1,5 % en poids et 4,6 % en poids ;
C) de 4 % en poids à 18 % en poids ; un copolymère de propylène et d'éthylène comprenant :
c1) de 29 % en poids à 59 % en poids d'un homopolymère de propylène présentant une fraction soluble dans le xylène, déterminée conformément à la norme ISO 16152 : 2005, inférieure à 4,0 % en poids ; et un indice de fluidité à chaud (ISO 1133, 230 °C/2,16 kg) compris entre 65 g/10 min et 120 g/10 min ;
c2) de 41 % en poids à 71 % en poids ; d'un copolymère de propylène et d'éthylène contenant de 30,8 % en poids à 62,0 % en poids ; de motifs dérivés de l'éthylène^{,} mesurés selon la méthode de RMN au carbone¹³décrite dans le mémoire descriptif ;
ledit copolymère de propylène et d'éthylène étant en outre **caractérisé par** :
- un indice de fluidité à chaud (ISO 1133, 230 °C/5,0 kg) compris entre 0,5 et 11,2 g/10 min ;
- une teneur en fraction soluble dans le xylène à 25 °C, déterminée selon la norme ISO 16152:2005, comprise entre 35,0 % en poids et 58,0 % en poids ;
- une viscosité intrinsèque de la fraction soluble dans le xylène à 25 °C, mesurée dans le tétrahydronaphtalène à 135 °C, comprise entre 2,3 et 4,9 dl/g ;
- la teneur totale en éthylène, mesurée selon la méthode de RMN¹³C décrite dans le cahier des charges, comprise entre 19,2 % en poids et 35,9 % en poids ;
dans ledit copolymère de propylène et d'éthylène, la somme de c1) et c2), rapportée au poids total de c1) et c2), est de 100 % en poids,
l'indice de fluidité à chaud de la composition de polyoléfine recyclée, déterminé selon la norme ISO 1133 (230 °C, 2,16 kg), étant compris entre 34,0 g/10 min et 64,0 g/10 min ;
la somme des quantités de (A), (B) et (C), rapportée au poids total de (A), (B) et (C), est égale à 100 % en poids.

2. Composition de polyoléfine recyclée selon la revendication 1, dans laquelle :
le composant (A) est compris entre 39 % en poids et 60 % en poids,
le composant (B) est compris entre 35 % en poids et 48 % en poids ;
le composant (C) est compris entre 5 % en poids et 16 % en poids.

3. Composition de polyoléfine recyclée selon l'une quelconque des revendications 1 à 2, dans laquelle le composant A) présente une teneur en motifs dérivés de l'éthylène, mesurée par RMN ^{au (13)}C, comprise entre 0,4 % en moles et 1,7 % en moles.

4. Composition de polyoléfine recyclée selon l'une quelconque des revendications 1 à 3, dans laquelle le composant A) présente une teneur en motifs dérivés du 1-butène, mesurée par RMN au carbone¹³, comprise entre 0,5 % en moles et 2,0 % en moles.

5. Composition de polyoléfine recyclée selon l'une quelconque des revendications 1 à 4, dans laquelle, dans le composant (C), c1) est compris entre 34 % en poids et 54 % en poids ; et c2) est compris entre 46 % en poids et 66 % en poids.

6. Composition de polyoléfine recyclée selon l'une quelconque des revendications 1 à 5, dans laquelle le composant (C) présente une quantité de fraction soluble dans le xylène à 25 °C comprise entre 38,0 % en poids et 56,0 % en poids.

7. Composition de polyoléfine recyclée selon l'une quelconque des revendications 1 à 6, dans laquelle le composant (B) présente un indice de fluidité à chaud, déterminé selon la méthode ISO 1133 (230 °C, 2,16 kg), compris entre 7,0 g/10 min et 20,0 g/10 min.

8. Composition de polyoléfine recyclée selon l'une quelconque des revendications 1 à 7, dans laquelle le composant (B) présente une fraction soluble dans le xylène à 25 °C, déterminée conformément à la norme ISO 16152:2005, comprise entre 2,2 % en poids et 4,3 % en poids.

9. Composition de polyoléfine recyclée selon l'une quelconque des revendications 1 à 8, dans laquelle, dans le composant (C), la viscosité intrinsèque, mesurée dans le tétrahydronaphtalène, de la fraction soluble dans le xylène à 25 °C est comprise entre 2,6 et 4,5 dl/g.

10. Composition de polyoléfine recyclée selon l'une quelconque des revendications 1 à 9, dans laquelle, dans le composant A), la séquence ¹³C-RMN BBB, où B représente un motif dérivé du 1-butène, est comprise entre 0,5 % en moles et 2,0 % en moles.

11. Composition de polyoléfine recyclée selon l'une quelconque des revendications 1 à 10 , dans laquelle, dans le composant A), l'indice de fluidité à chaud, déterminé selon la méthode ISO 1133 (230 °C, 2,16 kg), est compris entre 2,0 g/10 min et 15,0 g/10 min.

12. La composition de polyoléfine recyclée selon l'une quelconque des revendications 1 à 11, dans laquelle, dans le composant C), la viscosité intrinsèque de la fraction soluble dans le xylène à 25 °C, mesurée dans le tétrahydronaphtalène à 135 °C, est comprise entre 2,9 et 4,1 dl/g.

13. Composition de polyoléfine recyclée selon l'une quelconque des revendications 1 à 11, dans laquelle, dans le composant C), la teneur totale en éthylène, mesurée selon la méthode de RMN au carbone¹³décrite dans le mémoire descriptif, est comprise entre 22,4 % en poids et 33,8 % en poids.

14. Composition de polyoléfine recyclée selon l'une quelconque des revendications 1 à 13, dans laquelle, dans le composant C), la quantité de fraction soluble dans le xylène à 25 °C est comprise entre 40 % en poids et 53 % en poids.

15. Article moulé par injection fabriqué à partir de la composition de polyoléfine recyclée selon les revendications 1 à 14.
